# EUROPÄISCHE PATENTSCHRIFT

(11) **EP 2 432 694 B1**
(45) Veröffentlichungstag und Bekanntmachung des Hinweises auf die Patenterteilung: **23.10.2019**
(21) Anmeldenummer: 10721477.7
(22) Anmeldetag: 18.05.2010
(51) Int. Cl.: B64F 5/30, C09D 5/00, C09D 5/16, C09D 189/00

(54) **VERFAHREN ZUM SCHUTZ DER OBERFLÄCHE EINES FLUGZEUGES VOR VERUNREINIGUNG MIT INSEKTENRESTEN UND/ODER VEREISUNGEN**
METHOD FOR PROTECTING THE SURFACE OF AN AIRCRAFT AGAINST SOILING WITH INSECT RESIDUES AND/OR ICING
PROCÉDÉ DE PROTECTION DE LA SURFACE D'UN AVION CONTRE LES IMPURETÉS DUES À DES RESTES D'INSECTES ET/OU CONTRE LE GIVRAGE

(30) Priorität: 18.05.2009 DE 102009003201
(43) Veröffentlichungstag der Anmeldung: 28.03.2012
(73) Patentinhaber: Fraunhofer-Gesellschaft zur Förderung der angewandten Forschung e.V., 80686 München (DE); Airbus Operations GmbH, 21129 Hamburg (DE)
(72) Erfinder: STENZEL, Volkmar, 27321 Thedinghausen (DE); WILKE, Yvonne, 28537 Bremen (DE); SCHRÜBBERS, Steffen, 28359 Bremen (DE); HARTWIG, Andreas, 27721 Ritterhude (DE); NIEDZWIEDZKI, Georg, 28199 Bremen (DE); GRÜNKE, Silke, 28201 Bremen (DE)
(74) Vertreter: Eisenführ Speiser
(86) Internationale Anmeldenummer: PCT/EP2010/056829
(87) Internationale Veröffentlichungsnummer: WO 2010/133602

(56) Entgegenhaltungen:
- FR-A- 1 003 239
- GB-A- 2 264 917
- LACHMANN G.V.: "Aspects of Insect Contamination in Relation to Laminar Flow Aircraft", MINISTRY OF AVIATION, AERONAUTICAL RESEARCH COUNCIL, A.R.C. TECHNICAL REPORT, C.P. NO. 484, 1960, Seite 28PP, XP002629642, London Gefunden im Internet: URL:http://naca.central.cranfield.ac.uk/re ports/arc/cp/0484.pdf [gefunden am 2011-03-23]
- Young T.M., Humphreys B.: "Liquid anti-contamination systems for hybrid laminar flow control aircraft - a review of the critical issues and important experimental results", Proceedings of the Institution of Mechanical Engineers, Part G: Journal of Aerospace Engineering, Bd. 218, Nr. 4 2004, Seiten 267-277, XP002629643, ISSN: 0954-4100, DOI: 10.1243/0954410041872825 Gefunden im Internet: URL:http://pep.metapress.com/content/pw134 n4142x37673/ [gefunden am 2011-03-23]
- Chambers: "Innovation in Flight", Reseacrh of the NASA Langley Research Center on Revolutionary Advanced Concepts for Aeronautics, NASA SP-2005-4539, 2005, Seiten I-VII,1-189, XP002629644, Gefunden im Internet: URL:http://www.history.nasa.gov/monograph3 9/mon39_a.pdf [gefunden am 2011-03-23]

## Beschreibung

Die Erfindung betrifft ein Verfahren zum Schutz eines Teils einer Oberfläche eines Flugzeuges vor Verunreinigung mit Insektenresten und/oder vor Vereisungen durch Vorsehen einer Schicht, die sich von der Oberfläche des Flugzeuges ablöst und dadurch auf ihr eventuell vorhandene Verunreinigungen und/oder Vereisungen entfernt. Die Erfindung betrifft ferner ein entsprechend beschichtetes Flugzeug, eine Vorrichtung zum Auftragen einer entsprechenden Schicht auf ein Flugzeug sowie die Verwendung einer entsprechend ausgestalteten Beschichtung zum Schutz von Teilen einer Oberfläche eines Flugzeuges vor Verunreinigung mit Insektenresten und/oder Vereisungen und die Verwendung einer Beschichtungsvorrichtung zum Beschichten eines Teils der Oberfläche eines Flugzeuges mit einer entsprechend ausgeschalteten Beschichtung.

Aus ökonomischen und ökologischen Gründen ist es wünschenswert, dass Flugzeuge einen möglichst geringen Treibstoffverbrauch haben. Flugzeuge der heutigen Generation werden im Regelfall mit Kerosin betrieben, wobei man derzeit davon ausgeht, dass Kerosin-basierte Treibstoffe auch in Zukunft die vorherrschende Treibstoffquelle sein werden. Dabei ist zu erwarten, dass die Kosten für entsprechende Treibstoffe zukünftig weiter steigen.

Es gibt mehrere Ansätze, den Treibstoffverbrauch bei Flugzeugen zu reduzieren: So führt z.B. der Einsatz neuer Materialien zu Gewichtsreduzierung und damit auch zu einer Verringerung des Treibstoffverbrauches. Ein wesentlicher Ansatz zur Senkung des Treibstoffverbrauches ist die Reduzierung des Luftwiderstandes von Flugzeugen. Dabei wird der Gesamtwiderstand stark vom Strömungsverhalten an den Flügeloberflächen beeinflusst. Am Flügel können laminare und turbulente Strömungen auftreten. Laminare Strömungen sorgen für einen deutlich geringeren Luftwiderstand im Vergleich zu turbulenten Strömungen. Um eine laminare Strömung zu erreichen, gibt es zwei Ansätze: Man kann zum einen Flügel verwenden, die eine natürliche laminare Strömung erlauben. Zum anderen lässt sich ein laminares Strömungsprofil auch durch die so genannte Hybrid Laminar Flow Control (HLFC) erreichen:
Bei der HLFC wird ein laminares Strömungsprofil durch Absaugen der anströmenden Luft durch eine poröse Oberfläche erreicht. Durch das Absaugen wird die Grenzschicht stabilisiert und eine laminare Strömung an der Oberfläche ermöglicht. Dieser Ansatz ist verhältnismäßig energieaufwändig.

Wie bereits oben angedeutet, ist es ökologisch und ökonomisch sinnvoll, den Treibstoffverbrauch zu reduzieren. Im Falle von Flugzeugen ist aus ökologischer Sicht der Vorteil in einem verringerten Treibstoffverbrauch nicht nur darin zu sehen, dass weniger Klimagase ausgestoßen werden und die Ressourcen geschont werden, sondern auch darin, dass eine Verringerung des Treibstoffverbrauches sich besonders positiv auswirkt, da Flugzeuge ihren Abgasausstoß in Höhen erzeugen, die besonders empfindlich auf Verschmutzungen reagieren.

Die Erzeugung von laminaren Strömungsprofilen ist technisch bereits realisierbar. In der Praxis wird das laminare Strömungsprofil jedoch häufig durch Verunreinigungen gestört. Die Verunreinigungen setzen sich auf der Oberfläche ab und führen so zu einer rauen Oberfläche. Durch die Rauigkeit treten Turbulenzen auf, die die laminare Strömung stören. Um einen laminaren Luftstrom unter Einsatzbedingungen zu gewährleisten, müssen die entstandenen Verunreinigungen entfernt oder zumindest deutlich reduziert werden. Bei Flugzeugen handelt es sich bei entsprechenden Verunreinigungen hauptsächlich um Insekten und gegebenenfalls auch um Eisbildung. Verunreinigungen mit Insekten treten am Boden und insbesondere während des Start- und Landevorganges auf, da Insekten mit dem Flugzeug kollidieren und auf diesem kleben bleiben.

Die Größe der Insekten variiert von 1 bis 2 mm bei Blattläusen und 20 mm bei Motten. Insekten können ein Gewicht von bis zu 40 g aufweisen. Sie bestehen im Wesentlichen aus zwei Bestandteilen, dem Exoskelett und der Hämolymphe. Das Exoskelett bildet die schützende Hülle und besteht hauptsächlich aus dem Polysaccharid Chitin und den Strukturproteinen Sklerotin und Resilin. Die inneren Organe der Insekten befinden sich in einer frei fließenden Blutflüssigkeit, der Hämolymphe. Die Hämolymphe besteht aus Proteinen, die gerinnen und wie Klebstoff wirken können. Dadurch haften Exoskelett-Teile an Oberflächen [O'Donoghue et al., 2002].

Für das Auftreten von Insekten sind vor allem drei Faktoren von Bedeutung:
- vertikale Verteilung
- Temperatur und Jahreszeit
- Windgeschwindigkeit.

Dabei ist zu berücksichtigen, dass der Großteil der Insekten in verhältnismäßig geringen Höhen zu finden ist. Demgegenüber ist im Bereich der üblichen Reisehöhe von Linienflugzeugen mit Insekten so gut wie gar nicht zu rechnen.

Croom und Holmes haben vorgeschlagen, dass ein Schutz gegen die Verschmutzung von Insekten nur bis zu einer Höhe von 152,4 m (500 ft) notwendig wäre, da nach Ansicht der Autoren in größeren Höhen praktisch keine Insekten mehr vorkommen. Nach Coleman sollten jedoch auch Höhen bis zu 1524 m (5000 ft) betrachtet werden: Bei einem typischen Flugzeugflug werden 54% der Insekten bereits am Boden aufgesammelt, 33% zwischen Start und der Höhe von 304,8 m (1000 ft) und die verbleibenden 13% in einer Höhe von 304,8 m bis 1524 m. Die Autoren Maresh und Bragg stimmen überein, dass die Mehrheit der Insekten auf der Erde und im Steigflug aufgesammelt werden.

Die Insektenaktivität ist abhängig von der Temperatur. Die höchste Aktivität tritt in einem Temperaturbereich von 21°C bis 27°C auf. Elsenaar und Hasnoot berichteten, dass die Insektendichte im Sommer und im Frühling am höchsten ist.

Bei hohen Windgeschwindigkeiten nimmt die Insektendichte stark ab.

Neben Insekten kann auch eine Vereisung der Tragflächen zu einer Veränderung der Aerodynamik führen. Im Gegensatz zur Verschmutzung mit Insekten handelt es sich bei der Vereisung auch um ein sicherheitstechnisches Problem. So führt die Vereisung von Teilen des Flugzeuges nicht nur zu Abbruch bzw. Verhinderung von laminaren Strömungen, sondern das Eis selbst kann auch zu einer deutlichen Gewichtserhöhung führen.

Im Stand der Technik sind eine Reihe Ansätze bekannt, Flugzeuge vor Verschmutzung durch Insekten und/oder Eisbildung insbesondere am Boden und während der Startphase vor Verunreinigungen insbesondere durch Insekten zu schützen:
Ein grundsätzlicher Ansatz ist, die zu schützenden Flächen auf Flugzeugen mit einer entfernbaren Vorrichtung abzudecken. Dies kann z.B. durch eine Papierschicht geschehen, die nach dem Start entfernt wird oder durch den Einsatz eines Deflektors, wie z.B. einer Krüger-Klappe, die nach Passieren der Insektenzone weggeklappt wird.

So schlägt die DE 35 29 148 zum Schutz von Flugzeugen vor Mückenschlag das Vorsehen einer Folie vor. Diese Folie wird nach dem Start als Ganzes gelöst und mittels einer Abziehvorrichtung eingezogen.

Auch die DE 39 36 403 A1 stellt ein ähnliches Prinzip vor, wobei eine Schutzhaube mit einer aktiven Lösungsvorrichtung vorgesehen ist.

In der DE 20 59 492 wird eine mechanisch zerstörbare Schutzhaube beschrieben.

Dieser Ansatz bietet den Nachteil, dass die Schutzvorrichtungen das Gewicht des Flugzeuges dauerhaft erhöhen, da die Schutzvorrichtungen wie z.B. die Krüger-Klappe dauerhaft auf dem Flugzeug verbleiben müssen oder alternativ für den Fall, dass sie nach Funktionserfüllung abgeworfen werden, erhebliche Entsorgungsprobleme aufgrund ihrer Größe verursachen. Außerdem ist das Aufbringen entsprechender Abdeckungen (insbesondere wenn sie nicht fest mit dem Flugzeug verbunden sind) im Regelfall sehr aufwändig.

Ein alternativer Ansatz ist der Einsatz von Reinigungsvorrichtungen, die ihre Aufgabe auch während des Fluges erfüllen können. In diese Kategorie fallen Schaber und Wischer sowie Sprühflutanlagen, um Insektenverschmutzung abzuwaschen. Beispiele für solche Anwendungen sind z.B. in der DE 40 20 585 und in der DE 40 16 850 offenbart.

Nachteilig an diesen Systemen ist, dass sie nur eine unzureichende Reinigungswirkung gewährleisten können. Da für das Erzeugen einer laminaren Strömung das Vorhandensein nur einer Insektenverschmutzung mit einer Höhe ≥40µm pro laufendem Meter störend wirken kann, sind diese mechanischen Reinigungssysteme für viele Anwendungen unzureichend. Zudem erhöhen sie ihrerseits auch das Gewicht des Flugzeuges in einem erheblichen Maße und auf die Dauer.

Als dritter Ansatz ist im Stand der Technik das Anbringen einer Beschichtung bekannt, die dauerhaft auf der zu schützenden Oberfläche verbleibt und Verschmutzungen abwehren oder reduzieren soll aufgrund ihrer Oberflächenbeschaffenheit. Ein Ansatz dazu ist die Verwendung elastischer Beschichtungen, die Verschmutzungen quasi reflektieren, wie sie z.B. in der GB 2 299 280 A vorgeschlagen werden. Einen entsprechenden Ansatz verfolgt auch die DE 1 190 342.

Diese Schutzschichten haben den Nachteil, dass sie das Gewicht des Flugzeuges dauerhaft erhöhen und eine im Regelfall unbefriedigende Schutzwirkung gegenüber Verschmutzungen besitzen. Dabei ist zu berücksichtigen, dass insbesondere während des Startvorganges Insekten mit hoher Kraft auf die Flugzeugoberfläche gedrückt werden. Hinzu kommt noch, dass entsprechende Schutzschichten nur einen unzureichenden Schutz vor Vereisungen insbesondere während Standzeiten am Boden bieten.

In früheren Untersuchungen sind wasserlösliche Filme zur Vermeidung von Insektenkontamination beschrieben worden (Coleman, W.S.: Wind Tunnel Experiments on the Prevention of Insect Contamination by means of Suluble Films and Liquids Over the Surface. Rep. To the Boundary Layer Control Committee, BLCC Note 39, 1952). In späteren Untersuchungen wurden diese Ansätze wegen Kompexität und Impraktikabilität (z.B. Aufbringen von Wasser in möglicherweise kalter Umgebung, verworfen (Cynthia C. Croom and Bruce J. Holmes, "Insect Contamination Protection for Laminar Flow Surfaces", NASA Langley Research Center Hampton Virginia). Ebenso sind bestimmte Aspekte der Insekten-Kontamination in Bezug auf laminare Strömung bei Flugzeugen beschrieben worden (Lachmann, G.V.: Aspects of Insect Contamination in Relation to Laminar Flow Aircraft. Ministry of Aviation, Aeronautical Research Council, A.R.C. Technical Report, C.P. NO. 484, 1960, Seite 28PP, XP002629642, London).

Aufgabe der vorliegenden Erfindung war es daher, die im Stand der Technik beschriebenen Nachteile möglichst weitgehend zu überwinden. Insbesondere sollte ein zuverlässiges Verfahren angegeben werden, mittels dessen die Verschmutzung durch Insekten sowie Vereisungen, die sich am Boden und während der Startphase ergeben, wirksam von der Flugzeugoberfläche entfernt werden können.

Erfindungsgemäß gelöst wird die Aufgabe durch ein Verfahren zum Schutz eines Teils einer Oberfläche eines Flugzeugs vor Verunreinigung mit Insektenresten und/oder vor Vereisungen, umfassend folgende Schritte:
a) Beschichten des zu schützenden Teiles der Oberfläche mit einer Beschichtung, die innerhalb einer Zeitspanne von ≤ 3 Stunden ab Start des Flugzeugs und unter normalen Flugbedingungen die Haftung an dem zu schützenden Teil der Oberfläche bis zur Ablösung verliert aufgrund von
   (i) Temperaturveränderung, wobei die Temperaturveränderung wenigstens teilweise bewirkt wird durch Umweltbedingungsänderungen aufgrund der Flughöhenveränderung nach dem Start des Flugzeugs, und Beschichtungsmaterialien der Beschichtung ausgewählt sind aus Polyurethandispersionen, Acrylatdispersionen oder Polyvinylacetatdispersionen oder biologischen Bindemitteln, und/oder
   (ii) UV-Strahlung unter Verwendung eines Polymers, das säurelabile Gruppen in der Hauptkette des Polymers enthält, und von Photosäuren als Initiator als Beschichtungsmaterialien für die Beschichtung und/oder
   (iii) Zugabe einer zersetzenden Komponente, die ausgewählt ist aus Enzymlösungen und/oder Säuren und/oder Basen, und/oder
   (iv) Luftfeuchtigkeitsdifferenz, wobei die Luftfeuchtigkeitsdifferenz wenigstens teilweise bewirkt wird durch Umweltbedingungsänderungen aufgrund der Flughöhenveränderung nach dem Start des Flugzeugs, und wobei die Beschichtung ein System ist, bei dem aufgrund von verringerter Luftfeuchtigkeit in hohen Höhen ein Zersetzungsprozess eintritt, und das vorzugsweise aufgrund der geringen Feuchtigkeit in der Tropopause so spröde wird, dass es einen Haftungsverlust bis zur Ablösung erleidet, und wobei die Beschichtung ein Casein basiertes, niedrig gefülltes Beschichtungsmaterial aufweist,
b) Aussetzen des zu schützenden Teiles der Oberfläche
   (i) der Temperaturveränderung und/oder
   (ii) der UV-Bestrahlung
   (iii) und/oder der Zugabe der zersetzenden Komponente, und/oder
   (iv) der Luftfeuchtigkeitsdifferenz,
   so dass sich die Beschichtung mit gegebenenfalls darauf vorhandenen Verunreinigungen und/oder Vereisungen ablöst Weiterhin wird die Aufgabe gelöst durch ein Flugzeug gemäß Anspruch 7, die Verwendung einer Beschichtung gemäß Anspruch 10 und die Verwendung einer Beschichtungsvorrichtung gemäß Anspruch 11.

Kern der Erfindung ist somit auf Flugzeugen eine Schicht vorzusehen, die temperaturbedingt-physikalisch oder chemisch abgebaut werden kann. Sie wird so ausgestaltet, dass sie insbesondere unter typischen Einsatzbedingungen (normalen Flugbedingungen) für Flugzeuge nur temporär auf der Oberfläche des Flugzeuges verbleibt, wobei die Ablösung der Schicht stets durch temperaturbedingt physikalische und/oder chemische Effekte mitbestimmt wird und nicht nur aufgrund von mechanischen Effekten bewirkt wird.

Unter normalen Flugbedingungen für Flugzeuge ist im Rahmen dieses Textes zu verstehen, dass das Flugzeug am Boden startet und sich dann nach einem Steigflug in eine typische Reisehöhe begibt. Dies erfolgt bevorzugt innerhalb von 30 Minuten ab dem Start. Typische Reisehöhe im Sinne dieser Erfindung ist mindestens 7.000 m. Dabei treten regelmäßig Temperaturdifferenzen von ≥ 30°C, bevorzugt ≥ 45°C auf. Gegenüber den Bedingungen am Boden erhöht sich darüber hinaus in größeren Höhen wie z.B. der Tropopause die natürliche UV-Strahlung erheblich, während die Luftfeuchtigkeit deutlich sinkt.

Unter einer zersetzenden Komponente im Sinne dieser Erfindung sind explizit keine Chemikalien zu verstehen, die im Stand der Technik dazu eingesetzt werden, auf Flugzeugen dauerhaft vorgesehene Beschichtungen zu entfernen. Solche ausgeschlossenen Mittel wären z.B. herkömmliche Entlackungsmittel. Dauerhaft vorgesehene Beschichtungen im Sinne dieser Definition sind dabei Beschichtungen, die dazu bestimmt sind, für mehr als zehn Flüge auf dem Flugzeug zu verbleiben. Bevorzugte zersetzende Komponenten im Sinne der vorliegenden Erfindung sind Enzymlösungen und/oder Säuren, und/oder Basen (Säuren und Basen, insbesondere, wenn das Bindemittel (Polymer) der Beschichtung spaltbare Esterbindungen umfasst).

Der der vorliegenden Erfindung zugrunde liegende Gedanke beruht darauf, dass Insekten nur bis zu einer bestimmten Höhe (vgl. weiter oben) auftreten. Deshalb ist ein Verschmutzungsschutz gegenüber Insekten nur in den ersten Minuten des Flugs notwendig, um während der Hauptflugzeit die Nachteile der Verschmutzung durch Insekten auszuschließen. Entsprechendes gilt auch für Vereisungen, die am Boden oder während der Startphase entstehen. Vorteile des erfindungsgemäßen Verfahrens sind, dass Verschmutzungen durch Insekten und Vereisungen zu einem einstellbaren Zeitpunkt nach der Startphase zuverlässig vollständig beseitigt werden können. Darüber hinaus sind die zum Schutz vorgesehenen Beschichtungen keine dauerhafte Gewichtsbelastung für das Flugzeug. Außerdem können die Schutzschichten an geeignete Auftragsverfahren angepasst werden, insbesondere indem sie als aushärtende Flüssigkeiten aufgetragen werden.

Aufgrund der vorliegenden Erfindung und insbesondere im Zusammenhang mit der vorliegenden Beschreibung wird der Fachmann eine Vielzahl von Ausgestaltungsmöglichkeiten der Erfindung ausführen können:

### i) Physikalisch-thermisch gesteuerter Abbau einer temporären Schicht

Die temporäre Schicht (Schutzschicht) kann so ausgestaltet werden, dass aufgrund der mit zunehmender Höhe kälter werdenden Luft eine Temperaturdifferenz nach dem Start auf die Beschichtung einwirkt, so dass die Beschichtung unter die Glasübergangstemperatur fällt. Dadurch wird die Beschichtung spröde. Die spröde Beschichtung verfügt dann nicht mehr über eine ausreichende Stabilität und wird durch die hohe Luftreibung, die beim Flug auftritt, zerstört.

Alternativ oder auch zusätzlich kann die für die Versprödung benötigte Differenztemperatur auch durch ein Erwärmen der Fläche vor oder bei dem Auftrag der Schutzschicht erzeugt werden. Ein solches Erwärmen ist im Falle von Flugzeugen z.B. denkbar in Kombination mit einer Enteisung, die sinnvollerweise natürlich generell vor Auftrag einer entsprechenden Schutzschicht vorgenommen wird.

Beispiele für Beschichtungsmaterialien, die sich für eine entsprechende temporäre Schicht eignen, sind Polyurethandispersionen, Acrylatdispersionen oder Dispersionen von Thermoplasten, z.B. Polyvinylacetat. Häufig ist in diesem Zusammenhang ein UVhärtendes Acrylatsystem bevorzugt. Eine weitere Option besteht in der Verwendung von biologischen Bindemitteln, z.B. Casein

Selbstverständlich können durch Einsatz eines Enteisungssystems während des Fluges zusätzliche Spannungen in der temporären Schicht erzeugt werden, z.B. bei einer Außentemperatur von -50°C durch eine Erwärmung der beschichteten Flächen auf ca. 80°C.

Ein Vorteil von thermisch-physikalisch abbaubaren temporären Schichten ist insbesondere darin zu sehen, dass die Schicht so ausgestaltet werden kann, dass sie im normalen Flugbetrieb die Haftung von der zu schützenden Oberfläche vollständig verlieren kann, ohne dass weitere Maßnahmen ergriffen werden müssen. Bevorzugt ist in diesem Zusammenhang, dass auch ein Erwärmen z.B. durch das Enteisungssystem im Zusammenhang mit dem Auftrag oder nach dem Auftrag nicht erforderlich ist.

Der Fachmann kann bei der Materialauswahl für die Schicht die Effekte mitberücksichtigen, die im normalen Flugbetrieb auftreten, das bedeutet insbesondere die Scherwirkung, die aufgrund der Luftreibungen auf die entsprechenden Schichten wirken.

### ii) Chemisch gesteuerter Abbau einer temporären Schicht aufgrund von UV-Strahlung

Für den chemischen Abbau der temporären Beschichtung lassen sich z.B. Photosäuren als Initiatoren einsetzen. Photosäuren sind Stoffe, die unter UV-Strahlung Säuren bilden. Photosäuren lassen sich in ionische und nichtionische Photosäuren unterteilen. Die ionischen Photosäuren gehören der Gruppe der Oniumsalze an, z.B. Phenyldiazonium-, Diphenyliodonium-, Triphenylsulfonium- oder Triarylphosphoniumsalze mit den Kationen BF₄⁻, SbF₆⁻, AsF₆⁻ und PF₆⁻. Nichtionische Photosäuren sind in der Regel Stoffe, die unter UV-Strahlung Sulfonsäuren bilden.

Für Systeme, die Photosäuren als Initiator verwenden, wird UV-Licht als Auslöser genutzt. Durch das Zusammenwirken von Photosäuren und UV-Licht bilden sich Protonen, die eine saure Hydrolyse der Beschichtung katalysieren. Die Hydrolyse führt zur Spaltung des in der Beschichtung verwendeten Polymers und damit zur Auflösung (Abbau) der Schicht.

Damit sich die Beschichtung auflösen kann, wird ein Polymer verwendet, das säurelabile Gruppen in der Hauptkette des Polymers enthält. Ein Beispiel hierfür ist die Implementation von Estergruppen in die Hauptkette.

Da bei einer Photosäure die Säurekomponente erst bei Bestrahlung freigesetzt wird, kann die Photosäure problemlos in die Beschichtung eingearbeitet werden. Ein bevorzugtes Beispiel für eine Photosäure ist Diphenyliodoniumhexafluoroantimonat. Unter UV-Einstrahlung bildet sich HSbF₆, das in HF (starke Brönsted-Säure) und SbF₅ (starke Lewis-Säure) zerfällt. Die Freisetzung der Säure als Katalysator verläuft irreversibel und ist im Reaktionsschema 1 dargestellt.

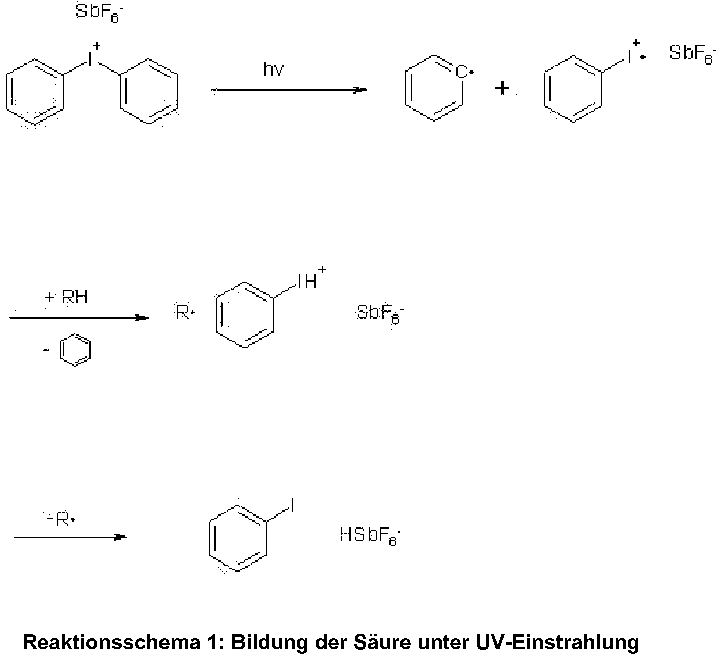

Im Falle der oben vorgeschlagenen Estergruppen verläuft die Spaltung der Hauptpolymerkette über eine Umesterung mit einem Alkohol. Der Alkohol muss in die Beschichtung integriert werden. Damit der Alkohol beim Auftrag der Schicht in der Schicht verbleibt, wird bevorzugt ein schwer verdampfbarer Alkohol ausgewählt. Bevorzugt sind primäre Alkohole, da diese die höchste Reaktionsgeschwindigkeit aufweisen. Ein Beispiel für einen entsprechenden Alkohol, der schwer verdampfbar und primär ist, ist Butyldiglycol.

Das Reaktionsschema 2 zeigt die Umesterung in der Polymerhauptkette, die zur Kettenverkürzung führt.

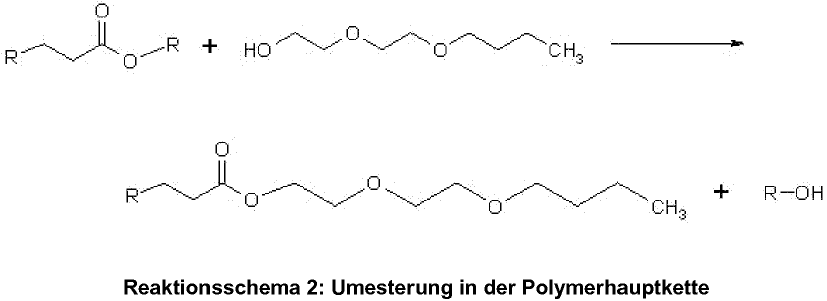

Bevorzugt für dieses System ist ein Polyurethansystem. Da die Hydroxygruppen des eingesetzten Alkohols mit den Isocyanatgruppen des Härters des Polyurethan (PUR)-System reagieren würden, ist bevorzugt, das Bindemittel in Anwesenheit von Butylacetat in Lösung zu polymerisieren und anschließend die Photosäure (bevorzugt Diphenyliodoniumhexafluoroantimonat) und den Alkohol (bevorzugt Butyldiglycol) zuzugeben. Die Beschichtung wird dann als 1K-PUR System (Ein-Komponenten PUR-System) aufgetragen, zu einer bevorzugten Rezeptur wird auf das Beispiel 1 verwiesen.

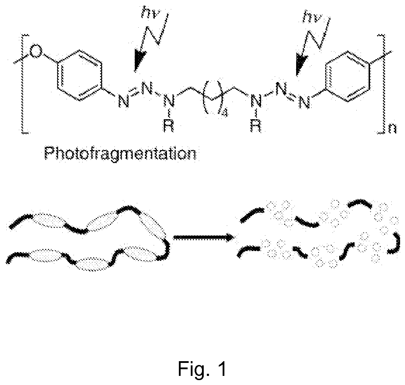

Ein alternatives Beispiel für ein Konzept für eine Beschichtung, die aufgrund von UV-Strahlung chemisch gesteuert abgebaut werden kann (temporär ausgestaltet ist), ist der Ansatz, UV-empfindliche Gruppen in die Hauptkette des Polymers zu integrieren. Diese UV-empfindlichen Gruppen zersetzen sich bei Exposition gegen UV-Licht. Beispiele für UV-empfindliche Gruppen sind Aryltriazen-Chromophor-Systeme (Ar-N=N-N). Diese Gruppen zersetzen sich unter Bildung von Stickstoff, so dass die Stabilität des Polymers herabgesetzt wird. Schematisch wird dieser Vorgang in der Fig. 1 dargestellt.

Fig. 1 stellt die Photofragmentation einer Primärhauptkette für ein Triazensystem dar.

Die Struktur des verwendeten Polymers ist ebenfalls in Fig. 1 dargestellt. Ein Beispiel für eine entsprechende Synthese ist die Diazotierung eines bifunktionellen primären Amins und anschließende Umsetzung mit einem sekundären bifunktionellen Amin zum Aryltriazen. Da in diesem Fall jeweils bifunktionelle Amine eingesetzt werden, kommt es zur Ausbildung eines Thermoplastes. Die schematische Darstellung der Synthese ist im Reaktionsschema 3 dargestellt.

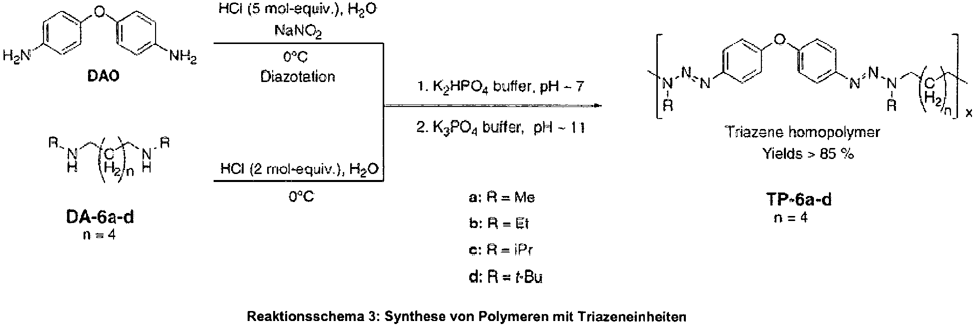

Eine entsprechende Beschichtung wird dann als 1-Komponenten-System aufgetragen.

Eine weitere Variante einer UV-empfindlichen temporären Schutzschicht basiert auf einem radikalischen Abbau. Hier erfolgt eine Destabilisierung der Beschichtung mittels einer Radikalreaktion im Bindemittel. Die Radikalreaktion wird durch photokatalytisch aktive Pigmente ausgelöst. Ein Beispiel für ein photokatalytisch aktives Pigment ist Titandioxid.

Das Prinzip des radikalischen Abbaus einer pigmentierten Beschichtung, der ausgelöst wird durch UV-Strahlung, ist unter dem Begriff Kreidung schon seit langem bekannt. Die vorhandenen Pigmentpartikel verlieren durch die photochemische Reaktion ihren Verbund mit der Beschichtung. Beim Abwischen einer solchen Oberfläche gewinnt man den Eindruck, es habe eine Kreideschicht vorgelegen. Normalerweise wird versucht, diesen Effekt möglichst zu verhindern, im Sinne der vorliegenden Erfindung ist er jedoch ausdrücklich gewünscht.

Als Beispiel eines entsprechenden Beschichtungssystems kann ein Epoxidharz auf Bisphenol-A-Basis gelten. Diese Harze verfügen über eine geringe UV-Beständigkeit, was sie für den Einsatz im Sinne der Erfindung geeignet macht.

Das bevorzugt eingesetzte Pigment Titandioxid ist eine polymorphe Verbindung und kommt in den Phasen Anatas, Rutil und Brookit vor. Nur die Phasen Anatas und Rutil sind für photokatalytische Reaktionen interessant, da amorphes Titandioxid im Regelfall nicht ausreichend photokatalytisch aktiv ist. Photokatalytische Reaktionen werden grundsätzlich eingeleitet, wenn ein Elektron von einem gefüllten Valenzband in das leere Leitungsband promoviert wird. Dabei nimmt das Elektron die Lichtenergie hv auf, die gleich oder größer ist als die Lücke zwischen Valenz- und Leitungsband. Durch Promotion des Elektrons bleibt eine Lücke im Valenzband zurück. Bei dieser Reaktion entsteht also ein Elektronen/Loch-Paar. Die benötigte Energie ist im Falle von Titandioxid dabei 380 nm (3,23 eV) für Anatas und 410 nm (3,10 eV) für Rutil. Ein bevorzugtes Beispiel für ein Titandioxidpigment ist "Degussa P25". Dieses Produkt besitzt eine sehr hohe Reaktivität.

Eine entsprechende Beschichtung wird als 2-Komponenten-System eingesetzt.

In dem erfindungsgemäßen Verfahren einzusetzende Schichten, die aufgrund von UV-Strahlung ihre Bindungskraft verringern, können so eingestellt werden, dass diese Verringerung ohne weitere Maßnahmen durch erhöhte UV-Strahlung in größeren Höhen während des normalen Flugbetriebes erfolgt. Es ist aber auch möglich, das Flugzeug gezielt mit einer Bestrahlungsvorrichtung auszurüsten, mittels derer zu einem gewünschten Zeitpunkt die benötigte UV-Strahlung abgegeben wird, die zur Zersetzung der Schutzschicht führt.

### iii) Erfindungsgemäß einzusetzende Schichten, die die Haftung aufgrund von zersetzenden Komponenten verringern:

Als in erfindungsgemäße Verfahren einzusetzende Beschichtungen können auch Schichten eingesetzt werden, bei denen das Bindemittel Polymere enthält, die durch Enzyme gespalten werden, so dass die Schicht ihre Haftung zum Substrat verringert. Bevorzugt ist in diesem Zusammenhang, dass die Polymere Biopolymere sind wie z.B. Zucker oder Proteine. Entsprechende Polymere können als Bindemittelbestandteil der Beschichtung eingesetzt werden.

Der Zeitpunkt, zu dem die Zersetzungsreaktion für die Schutzschicht gestartet werden soll, kann durch Zugabe einer zweiten (zersetzenden) Komponente festgelegt werden. Dies kann z.B. im Rahmen einer Benetzungsaddition von Proteinabbauenden Enzymen zu einer proteinbasierten Schutzschicht (z.B. auf Basis von aufgeschlossenem Casein) sein.

Dem Fachmann sind eine Reihe von Alternativen zu biopolymerbasierten und enzymzersetzbaren erfindungsgemäß einzusetzenden Schichten bekannt. Als Beispiel seien hier z.B. Polyester genannt, die unter der Zugabe von Basen oder Säuren (jeweils als zersetzende Komponente) hinsichtlich ihrer Hafteigenschaften zu dem Substrat so beeinflusst werden können, dass sie die Haftung bis zum vollständigen Haftungsverlust verringern.

Der Vorteil solcher Zweikomponenten-Systeme liegt darin, dass der genaue Zeitpunkt, zu dem die Zersetzung (der Abbau und damit die Haftungsverringerung) beginnen soll, definiert ist. Hinzu kommt, dass ein Teil der Beschichtung schon lange vor dem Start des Flugzeuges aufgebracht werden kann, und erst die zweite Komponente kurz vor dem Start oder sogar aufgrund einer mitgeführten Sprühvorrichtung während des Fluges aufgebracht werden kann.

### iv) Erfindungsgemäß einzusetzende Schichten, die aufgrund von Luftfeuchtigkeitsdifferenz ihre Haftung verringern

Grundsätzlich ist es auch möglich, Schichten so auszugestalten, dass sie aufgrund von Luftfeuchtigkeitsdifferenzen ihre Haftung zum Substrat verringern. Bevorzugt für das erfindungsgemäße Verfahren sind dabei solche Systeme, bei denen aufgrund von verringerter Luftfeuchtigkeit in hohen Höhen der Zersetzungsprozess eintritt. Solche Schichten werden z.B. aufgrund der geringen Feuchtigkeit in der Tropopause so spröde, dass sie einen ausreichend hohen Haftungsverlust aufweisen.

Beispiele für entsprechende Beschichtungssysteme sind Caseinbasierte, niedrig gefüllte Beschichtungsstoffe.

Dem Fachmann ist klar, dass die oben beschriebenen Effekte wie z.B. Haftungsverringerung aufgrund von Temperaturdifferenz und UV-Bestrahlung auch miteinander kombiniert werden können, um das gewünschte Ergebnis (die Ablösung der Schutzschicht vom Flugzeug) zu erzielen.

Bevorzugt sind die Schichtsysteme so ausgestaltet, dass sie innerhalb von ≤ 2 h, weiter bevorzugt ≤ 1 h, weiter bevorzugt ≤ 30 min und bevorzugt nach (gegebenenfalls vollständigem) Auftrag jeweils nach dem Start des Flugzeugs und unter normalen Flugbedingungen die Haftung von dem zu schützenden Teil der Oberfläche bis zur Ablösung verringern können. Dabei ist diese Bedingung insbesondere auf die normalen Flugbedingungen bezogen, bei denen noch weitere Effekte, z.B. aufgrund des Luftwiderstandes, bei der Ablösung mitwirken.

Wie bereits oben angedeutet ist es bevorzugt, dass die zur Ablösung der Schutzschicht von dem zu schützenden Teil der Oberfläche des Flugzeuges aufgrund einer Temperaturveränderung, einer UV-Bestrahlung und/oder einer Luftfeuchtigkeitsdifferenz wenigstens teilweise (bevorzugt vollständig, ggf. zusammen mit der mechanischen Belastung unter normalen Flugbedingungen) durch Umweltbedingungsänderungen bewirkt wird, die auf der Flughöhenveränderung nach dem Start des Flugzeuges beruhen.

In vielen Fällen ist es bevorzugt, das erfindungsgemäße Verfahren dadurch zu unterstützen, dass die zu schützende Oberfläche mit einer erosionsfesten Schicht aus einem der nachfolgenden Materialien beschichtet ist oder von dieser gebildet wird:
- Metall, z.B. Edelstahl, Titan, Aluminium oder hartverchromtes Metall,
- metallisierter Kunststoff, z.B. galvanisch metallisierter Kunststoff, wie z.B. hartverchromter Kunststoff,
- plasma- oder flammgespritzte Metallschichten z.B. aus Edelstahl oder Titan,
- keramische Verschleißschutzschichten, wie z.B. aus Titannitrid oder Bornitrid,
- DLC-Schichten oder Diamantbeschichtungen,
- elastomere Verschleißschutzschichten auf Basis von Gummi, Polyurethan oder Silicon,
- im Sol-Gel-Verfahren hergestellte anorganische Schichten, z.B. silikatische Beschichtungen,
- im Sol-Gel-Verfahren hergestellte anorganisch-organische Hybridschichten,
- Organische Lackbeschichtungen
- Plasmapolymere Beschichtungen.

Diese Beschichtungen können insbesondere auch dazu dienen, im Zusammenwirken mit der tatsächlichen Oberflächengestaltung der Flugzeugoberfläche laminare Luftströmungen (nach Entfernen der Schutzschicht und den sich darauf gegebenenfalls befindenden Verschmutzungen) zu gewährleisten. Dabei ist es dem Fachmann möglich, die temporäre Schutzschicht an die jeweilige Oberfläche in geeigneter Weise anzupassen. Dies bedeutet insbesondere, dass die temporäre Schutzschicht im Bereich des Steigfluges bis zur gewünschten Ablösung (also in dem Bereich, in dem sie ihre Schutzfunktion aufgrund des Insektenschlages erfüllen muss) über eine ausreichende Haftung verfügt und andererseits durch einen geeigneten Zersetzungsmechanismus sich schnell zersetzt, so dass sie zusammen mit den Verschmutzungen die Haftung zu der zu schützenden Oberfläche verliert, nachdem sie ihre Funktion erfüllt hat.

Bevorzugt ist es, die erfindungsgemäß einzusetzende Schutzschicht so auszugestalten, dass an ihr auch Insektenverunreinigungen haften bleiben, die vor dem Auftrag der Schutzschicht schon vorhanden waren. Dies ist insbesondere dann der Fall, wenn die Flugzeugoberfläche im Rahmen der Landung (bei der im Regelfall ja keine Schutzschicht mehr vorhanden ist, da diese während des Fluges regelmäßig entfernt wird) mit Insektenresten verunreinigt wurde. Bei einer solchen Ausgestaltung der Schicht lässt sich ein Reinigen der zu beschichtenden Oberfläche vor dem Beschichten gegebenenfalls einsparen.

Dem Fachmann ist natürlich klar, dass die Schutzschicht ihre Schutzfunktion insbesondere im Hinblick auf eine zu gewährleistende laminare Strömung des zu schützenden Bereiches nur dann ausfüllen kann, wenn dieser entweder vor Auftrag der Schutzschicht gereinigt wurde oder wenn bevorzugt die Schutzschicht so ausgestaltet ist, dass die bei ihrem Auftrag vorhandene Verunreinigungen bei der Ablösung der Schutzschicht gemäß dem erfindungsgemäßen Verfahren mitentfernt werden.

Die letztere Variante kann auch durch eine geeignete Gestaltung der zu schützenden Oberfläche unterstützt werden, wie z.B. durch eine hydrophobe Ausgestaltung.

In vielen Fällen ist ein erfindungsgemäßes Verfahren bevorzugt, bei dem die Beschichtung aufgebracht wird durch eine mit dem Flugzeug fest verbundene Vorrichtung. Eine solche Vorrichtung können z.B. Düsen sein, die in der Flügelvorderkante versenkt sind und für den Sprühvorgang herausgefahren werden können. Alternativ kann es sich dabei um eine Vorrichtung handeln, die sich entlang der zu beschichtenden Oberfläche bewegt und das Beschichtungsmaterial im Sprühverfahren aufträgt. Diese Vorrichtung kann z.B. während des Fluges in der Rumpfseitenwand versenkt werden.

Der Vorteil solcher Vorrichtungen liegt darin, dass sie eine gleichbleibende Beschichtungsqualität gewährleisten und für eine Beschichtung stets zur Verfügung stehen.

Alternativ und für einige Anwendungen ebenfalls bevorzugt, kann das Auftragen für das erfindungsgemäße Verfahren durch eine externe Vorrichtung erfolgen. Eine solche Vorrichtung kann z.B. eine große mit Sprühvorrichtungen versehene Halle sein. Alternativ können Vorrichtungen wie die zurzeit im Stand der Technik typisch eingesetzten Enteisungsfahrzeuge eingesetzt werden. Diese Fahrzeuge sind mit einer Hebebühne ausgestattet, auf der eine Sprühvorrichtung montiert ist, so dass entlang der zu beschichtenden Oberflächen entlanggefahren werden kann und die Beschichtung im Sprühverfahren aufgebracht werden kann.

Ebenfalls kann für einige Anwendungen bevorzugt sein, dass die UV-Strahlung, die zur Ablösung der Schutzschicht führt, wenigstens teilweise bewirkt wird durch eine künstliche UV-Quelle, die Bestandteil des Flugzeugs sein kann.

Bevorzugt wird das erfindungsgemäße Verfahren so durchgeführt, dass die Beschichtung weniger als 30 Minuten, bevorzugt weniger als 20 Minuten, bevorzugt weniger als 10 Minuten vor dem Start des Flugzeuges aufgebracht wird.

Dies ist insbesondere für Beschichtungen sinnvoll, bei denen der Zersetzungsprozess z.B. durch Zugabe von Enzymlösungen bereits vor dem Start beginnt.

Teil der Erfindung ist auch ein Flugzeug mit einer Beschichtung auf einem Teil seiner Oberfläche, wobei die Beschichtung so ausgestaltet ist, dass sie innerhalb einer Zeitspanne von ≤ 3 Stunden ab Start des Flugzeugs und unter normalen Flugbedingungen die Haftung zu dem zu schützenden Teil der Oberfläche bis zur Ablösung verringern kann aufgrund von (i) Temperaturveränderung und/oder (ii) UV-Strahlung und/oder (iii) Zugabe einer zersetzenden Komponente und/oder (iv) Luftfeuchtigkeitsdifferenz.

Erfindungsgemäß bevorzugt sind Flugzeuge, umfassend eine der oben als bevorzugt beschriebenen (temporären) Schutzbeschichtungen, sowie gegebenenfalls eine Vorrichtung zum Aufbringen der Beschichtung und/oder eine Vorrichtung zum Besprühen der Beschichtung (insbesondere mit einer zersetzenden Komponente) und/oder eine künstliche UV-Lichtquelle zum Bestrahlen der Beschichtung.

Die erfindungsgemäßen Flugzeuge sind geschützt gegen Verschmutzungen durch Insekten, die am Boden, während des Startes und des Steigfluges entstehen können. Entsprechendes gilt auch für Vereisungen. Dabei versteht der Fachmann selbstverständlich, dass eine Verschmutzung des Flugzeuges auf der Schutzschicht zunächst stattfinden kann, das Flugzeug aber selbst (d.h. ohne die Schutzschicht) vor einer entsprechenden Verschmutzung geschützt ist, da diese vom Flugzeug zusammen mit der Schutzschicht durch Auslösen des geeigneten Mechanismus erfindungsgemäß entfernt werden kann.

Bestandteil der Erfindung ist auch eine Vorrichtung zum Auftragen einer Beschichtung auf ein Flugzeug, die so ausgestaltet ist, dass sie innerhalb einer Zeitspanne von ≤ 3 Stunden ab Start des Flugzeugs und unter normalen Flugbedingungen die Haftung zu dem zu schützenden Teil der Oberfläche bis zur Ablösung verringern kann aufgrund von (i) Temperaturveränderung und/oder (ii) UV-Strahlung und/oder (iii) Zugabe einer zersetzenden Komponente und/oder (iv) Luftfeuchtigkeitsdifferenz, wobei die Vorrichtung verbunden mit dem Flugzeug ist und wobei die Vorrichtung herausfahrbare Düsen umfasst und/oder so ausgestaltet ist, dass sie sich entlang der zu beschichtenden Oberfläche bewegen kann.

Unter "herausfahrbaren Düsen" ist in diesem Zusammenhang zu verstehen, dass die Düsen gegenüber der Oberfläche des Flugzeuges eine Lageveränderung erfahren können, die gegenüber dieser Oberfläche eine senkrechte Komponente umfasst. Die Ausgestaltungsform, dass "sich die Vorrichtung entlang der zu beschichtenden Oberfläche bewegen kann" bedeutet im Zusammenhang mit dieser Anmeldung, dass wenigstens ein Teil der Beschichtungsvorrichtung eine Bewegung ausführen kann, die gegenüber der zu beschichtenden Oberfläche eine parallele Komponente umfasst. Selbstverständlich ist auch ein Flugzeug mit einer entsprechenden Beschichtungsvorrichtung Bestandteil der Erfindung.

Der Vorteil einer solchen Vorrichtung ist oben bereits beschrieben worden und besteht insbesondere darin, dass ein reproduzierbares Auftragen der Beschichtung sowie eine ständige Verfügbarkeit gewährleistet ist.

Weiterhin Bestandteil der Erfindung ist die Verwendung einer Beschichtung, die so ausgestaltet ist, dass sie innerhalb einer Zeitspanne von ≤ 3 Stunden ab Start des Flugzeugs und unter normalen Flugbedingungen die Haftung zu dem zu schützenden Teil der Oberfläche bis zur Ablösung verringern kann aufgrund von (i) Temperaturveränderung und/oder (ii) UV-Strahlung und/oder (iii) Zugabe einer zersetzenden Komponente und/oder (iv) Luftfeuchtigkeitsdifferenz zum Schutz eines Teiles einer Oberfläche eines Flugzeuges vor Verunreinigung mit Insektenresten und/oder vor Vereisungen.

Außerdem Bestandteil der Erfindung ist eine Verwendung einer Beschichtungsvorrichtung zum Beschichten eines Teiles der Oberfläche eines Flugzeuges mit einer Beschichtung, die so ausgestaltet ist, dass sie innerhalb einer Zeitspanne von ≤ 3 Stunden ab Start des Flugzeugs und unter normalen Flugbedingungen die Haftung zu dem zu schützenden Teil der Oberfläche bis zur Ablösung verringern kann aufgrund von (i) Temperaturveränderung und/oder (ii) UV-Strahlung und/oder (iii) Zugabe einer zersetzenden Komponente und/oder (iv) Luftfeuchtigkeitsdifferenz.

Für die erfindungsgemäßen Verwendungen sind selbstverständlich die oben als bevorzugt beschriebenen Zeitspannen ab Start des Flugzeugs und unter normalen Flugbedingungen ebenfalls bevorzugt. Entsprechendes gilt auch für die als bevorzugt beschriebenen Ausführungsformen der erfindungsgemäß einzusetzenden Beschichtung.

Nachfolgend wird die Erfindung anhand von Beispielen näher erläutert.

### Beispiel 1: Beispielrezeptur für eine Schutzschicht zur Ablösung durch UV-Strahlung

Bei der nachfolgenden Beispielrezeptur handelt es sich um ein Einkomponenten-System, das im Sprühverfahren aufgetragen werden kann.

**Tabelle 1**

| **Rezeptur** | | |
|---|---|---|
| **Pos.** | **Rohstoff** | **Einwaage [g]** |
| 01 | Leicht verzweigtes, OH-Gruppen haltiges Polyester (Desmophen 670) | 29,9 |
| 02 | Butylacetat | 44,9 |
| 03 | Dicyclohexylmethan Diisocyanate (Desmodur W) | 9,9 |
| 04 | Butyldiglycol | 15,0 |
| 05 | Diphenyliodonium hexafluoroantimonat | 0,3 |
| | **Summe** | 100 |

### Beispiel 2: Beispielsrezeptur für eine Schicht, die unter UV-Strahlung durch radikalischen Abbau ihre Haftung verringert:

Bei der Beschichtung handelt es sich um ein Zweikomponenten-System.

**Tabelle 3.1**

| **Rezeptur Stammlack** | | | |
|---|---|---|---|
| **Pos.** | **Rohstoff** | | **Einwaage [g]** |
| 01 | Polypox E 064 | | 34,5 |
| 02 | Degussa P25 | | 43,0 |
| 03 | Methoxypropylacetat | | 19,7 |
| 04 | n-Butanol | | 2,8 |
| | **Summe Stammlack** | | 100 |
| | | | |

| **Härter** | | | |
|---|---|---|---|
| **Pos.** | **Rohstoff** | | **Einwaage [g]** |
| 01 | Polypox H 147 | | 13,8 |
| | **Summe Härter** | | 13,8 |

### Beispiel 3: Beispielrezeptur für durch Kälteversprödung enthaftende Schicht:

Auftrag einer wässrigen Polyvinylacetat-dispersion (Craymul 2325 von Cray Valley Kunstharze GmbH in Zwickau) mit einer Trockenfilm-Schichtdicke von 15-30µm auf Aluminiumblechen, welche mittels einer plasmapolymeren Trennschicht hydrophobiert sein können.

### Beispiel 4: Beispielrezeptur für durch Austrocknen versprödende und enthaftende Schicht

Auftrag einer caseinbasierten Beschichtung auf Aluminiumblechen mit einer Trockenfilmdichte von 15-30µm. Die Caseinbeschichtung wird folgendermaßen hergestellt:

| | | |
|---|---|---|
| Borax-Lösung | 5g | 12,8 |
| Magerquark | 24g | 61,6 |
| Wasser | 10g | 25,6 |
| | 39g | 100 |

| | | |
|---|---|---|
| 5 g Borax in 20 g H2O lösen 5 g dieser Lösung mit 24 g Magerquark vermengen 2 h quellen lassen mit 10 g H2O verdünnen | | |

Sämtliche Beispielrezepturen lösen sich nach Schichtbildung unter (ggf. simulierten) Start-/Flugbedingungen in weniger als 180 Minuten vom jeweiligen Substrat, im Falle der Beispielrezepturen 3 und 4 sogar in weniger als 60 Minuten.

## Patentansprüche

1. Verfahren zum Schutz eines Teiles einer Oberfläche eines Flugzeuges vor Verunreinigung mit Insektenresten und/oder vor Vereisungen, umfassend folgende Schritte:
a) Beschichten des zu schützenden Teiles der Oberfläche mit einer Beschichtung, die innerhalb einer Zeitspanne von ≤ 3 Stunden ab Start des Flugzeugs und unter normalen Flugbedingungen die Haftung an dem zu schützenden Teil der Oberfläche bis zur Ablösung verliert aufgrund von (i) Temperaturveränderung, wobei die Temperaturveränderung wenigstens teilweise bewirkt wird durch Umweltbedingungsänderungen aufgrund der Flughöhenveränderung nach dem Start des Flugzeugs, und Beschichtungsmaterialien der Beschichtung ausgewählt sind aus Polyurethandispersionen, Acrylatdispersionen oder Polyvinylacetatdispersionen oder biologischen Bindemitteln, und/oder (ii) UV-Strahlung unter Verwendung eines Polymers, das säurelabile Gruppen in der Hauptkette des Polymers enthält, und von Photosäuren als Initiator als Beschichtungsmaterialien für die Beschichtung und/oder (iii) Zugabe einer zersetzenden Komponente, die ausgewählt ist aus Enzymlösungen und/oder Säuren und/oder Basen, und/oder (iv) Luftfeuchtigkeitsdifferenz, wobei die Luftfeuchtigkeitsdifferenz wenigstens teilweise bewirkt wird durch Umweltbedingungsänderungen aufgrund der Flughöhenveränderung nach dem Start des Flugzeugs, und wobei die Beschichtung ein System ist, bei dem aufgrund von verringerter Luftfeuchtigkeit in hohen Höhen ein Zersetzungsprozess eintritt, und das vorzugsweise aufgrund der geringen Feuchtigkeit in der Tropopause so spröde wird, dass es einen Haftungsverlust bis zur Ablösung erleidet, und wobei die Beschichtung ein Casein basiertes, niedrig gefülltes Beschichtungsmaterial aufweist;
b) Aussetzen des zu schützenden Teiles der Oberfläche (i) der Temperaturveränderung und/oder (ii) der UV-Bestrahlung (iii) und/oder der Zugabe der zersetzenden Komponente und/oder (iv) der Luftfeuchtigkeitsdifferenz, so dass sich die Beschichtung mit gegebenenfalls darauf vorhandenen Verunreinigungen und/oder Vereisungen ablöst.

2. Verfahren nach Anspruch 1, wobei die UV-Strahlung wenigstens teilweise bewirkt wird durch Umweltbedingungsänderungen aufgrund der Flughöhenveränderung nach dem Start des Flugzeuges.

3. Verfahren nach Anspruch 1 oder 2, wobei die Temperaturveränderung wenigstens teilweise bewirkt wird durch Aufheizen des zu schützenden Teiles der Oberfläche vor oder nach dem Beschichten.

4. Verfahren nach einem der vorangehenden Ansprüche, wobei die Beschichtung aufgebracht wird durch eine mit dem Flugzeug fest verbundene Vorrichtung.

5. Verfahren nach einem der vorangehenden Ansprüche, wobei die UV-Strahlung wenigstens teilweise bewirkt wird durch eine künstliche UV-Lichtquelle.

6. Verfahren nach einem der vorangehenden Ansprüche, wobei die Beschichtung weniger als 30 Minuten vor dem Start des Flugzeugs aufgebracht wird.

7. Flugzeug mit einer Beschichtung auf einem Teil seiner Oberfläche, wobei die Beschichtung so ausgestaltet ist, dass sie innerhalb einer Zeitspanne von ≤ 3 Stunden ab Start des Flugzeugs und unter normalen Flugbedingungen die Haftung an dem zu schützenden Teil der Oberfläche bis zur Ablösung verliert aufgrund von (i) Temperaturveränderung, wobei die Temperaturveränderung wenigstens teilweise bewirkt wird durch Umweltbedingungsänderungen aufgrund der Flughöhenveränderung nach dem Start des Flugzeugs, und Beschichtungsmaterialien der Beschichtung ausgewählt sind aus Polyurethandispersionen, Acrylatdispersionen oder Polyvinylacetatdispersionen oder biologischen Bindemitteln, und/oder (ii) UV-Strahlung unter Verwendung eines Polymers, das säurelabile Gruppen in der Hauptkette des Polymers enthält, und von Photosäuren als Initiator als Beschichtungsmaterialien für die Beschichtung und/oder (iii) Zugabe einer zersetzenden Komponente, die ausgewählt ist aus Enzymlösungen, wobei Biopolymere wie Zucker oder Proteine als Bindemittelbestandteil der Beschichtung eingesetzt sind, und/oder Zugabe einer zersetzenden Komponente, die ausgewählt ist aus Säuren und/oder Basen, wobei Beschichtungsmaterialien der Beschichtung ausgewählt sind aus Polyestern, und/oder (iv) Luftfeuchtigkeitsdifferenz, wobei die Luftfeuchtigkeitsdifferenz wenigstens teilweise bewirkt wird durch Umweltbedingungsänderungen aufgrund der Flughöhenveränderung nach dem Start des Flugzeugs, und wobei die Beschichtung ein System ist, bei dem aufgrund von verringerter Luftfeuchtigkeit in hohen Höhen ein Zersetzungsprozess eintritt, und das vorzugsweise aufgrund der geringen Feuchtigkeit in der Tropopause so spröde wird, dass es einen Haftungsverlust bis zur Ablösung erleidet, und wobei die Beschichtung ein Casein basiertes, niedrig gefülltes Beschichtungsmaterial aufweist.

8. Flugzeug nach Anspruch 7, wobei die Ablösung der Beschichtung bewirkbar ist durch Umweltbedingungsänderungen aufgrund der Flughöhenveränderung nach dem Start des Flugzeuges.

9. Flugzeug nach Anspruch 7 oder 8, umfassend eine Vorrichtung zum Aufbringen der Beschichtung und/oder eine Vorrichtung zum Besprühen der Beschichtung und/oder eine künstliche UV-Lichtquelle zum Bestrahlen der Beschichtung.

10. Verwendung einer Beschichtung, die so ausgestaltet ist, dass sie innerhalb einer Zeitspanne von ≤ 3 Stunden ab Start eines Flugzeugs und unter normalen Flugbedingungen die Haftung an einem zu schützenden Teil einer Oberfläche des Flugzeugs bis zur Ablösung verliert aufgrund von (i) Temperaturveränderung, wobei die Temperaturveränderung wenigstens teilweise bewirkt wird durch Umweltbedingungsänderungen aufgrund der Flughöhenveränderung nach dem Start des Flugzeugs, und Beschichtungsmaterialien der Beschichtung ausgewählt sind aus Polyurethandispersionen, Acrylatdispersionen oder Polyvinylacetatdispersionen oder biologischen Bindemitteln, und/oder (ii) UV-Strahlung unter Verwendung eines Polymers, das säurelabile Gruppen in der Hauptkette des Polymers enthält, und von Photosäuren als Initiator als Beschichtungsmaterialien für die Beschichtung und/oder (iii) Zugabe einer zersetzenden Komponente, die ausgewählt ist aus Enzymlösungen, wobei Biopolymere wie Zucker oder Proteine als Bindemittelbestandteil der Beschichtung eingesetzt sind, und/oder Zugabe einer zersetzenden Komponente, die ausgewählt ist aus Säuren und/oder Basen, wobei Beschichtungsmaterialien der Beschichtung ausgewählt sind aus Polyestern, und/oder (iv) Luftfeuchtigkeitsdifferenz, wobei die Luftfeuchtigkeitsdifferenz wenigstens teilweise bewirkt wird durch Umweltbedingungsänderungen aufgrund der Flughöhenveränderung nach dem Start des Flugzeugs, und wobei die Beschichtung ein System ist, bei dem aufgrund von verringerter Luftfeuchtigkeit in hohen Höhen ein Zersetzungsprozess eintritt, und das vorzugsweise aufgrund der geringen Feuchtigkeit in der Tropopause so spröde wird, dass es einen Haftungsverlust bis zur Ablösung erleidet, und wobei die Beschichtung ein Casein basiertes, niedrig gefülltes Beschichtungsmaterial aufweist, zum Schutz des Teiles der Oberfläche des Flugzeuges vor Verunreinigung mit Insektenresten und/oder vor Vereisungen.

11. Verwendung einer Beschichtungsvorrichtung zum Beschichten eines zu schützenden Teiles einer Oberfläche eines Flugzeuges mit einer Beschichtung, die so ausgestaltet ist, dass sie innerhalb einer Zeitspanne von ≤ 3 Stunden ab Start des Flugzeugs und unter normalen Flugbedingungen die Haftung an dem zu schützenden Teil der Oberfläche bis zur Ablösung verliert aufgrund von (i) Temperaturveränderung, wobei die Temperaturveränderung wenigstens teilweise bewirkt wird durch Umweltbedingungsänderungen aufgrund der Flughöhenveränderung nach dem Start des Flugzeugs, und Beschichtungsmaterialien der Beschichtung ausgewählt sind aus Polyurethandispersionen, Acrylatdispersionen oder Polyvinylacetatdispersionen oder biologischen Bindemitteln, und/oder (ii) UV-Strahlung unter Verwendung eines Polymers, das säurelabile Gruppen in der Hauptkette des Polymers enthält, und von Photosäuren als Initiator als Beschichtungsmaterialien für die Beschichtung und/oder (iii) Zugabe einer zersetzenden Komponente, die ausgewählt ist aus Enzymlösungen, wobei Biopolymere wie Zucker oder Proteine als Bindemittelbestandteil der Beschichtung eingesetzt sind, und/oder Zugabe einer zersetzenden Komponente, die ausgewählt ist aus Säuren und/oder Basen, wobei Beschichtungsmaterialien der Beschichtung ausgewählt sind aus Polyestern, und/oder (iv) Luftfeuchtigkeitsdifferenz, wobei die Luftfeuchtigkeitsdifferenz wenigstens teilweise bewirkt wird durch Umweltbedingungsänderungen aufgrund der Flughöhenveränderung nach dem Start des Flugzeugs, und wobei die Beschichtung ein System ist, bei dem aufgrund von verringerter Luftfeuchtigkeit in hohen Höhen ein Zersetzungsprozess eintritt, und das vorzugsweise aufgrund der geringen Feuchtigkeit in der Tropopause so spröde wird, dass es einen Haftungsverlust bis zur Ablösung erleidet, und wobei die Beschichtung ein Casein basiertes, niedrig gefülltes Beschichtungsmaterial aufweist.

## Claims

1. Method of protecting a part of a surface of an aircraft against contamination with insect residues and/or against icing, comprising the following steps:
a) coating the part of the surface to be protected with a coating that can, within a period of ≤ 3 hours from take-off of the aircraft and in normal flying conditions, reduce the adhesion to the part of the surface to be protected until detachment occurs on the basis of (i) temperature change, wherein the temperature change is at least partially caused by changes in the environmental conditions due to the change in flying altitude after the aircraft takes off, and coating materials of the coating are selected from polyurethane dispersions, acrylate dispersions or polyvinyl acetate dispersions or biological binders, and/or (ii) UV radiation using a polymer containing acid-labile groups in the main chain of the polymer, and photo-acids as initiators as coating materials for the polymer coating and/or (iii) addition of a decomposing component selected from enzyme solutions and/or acids and/or bases, and/or (iv) difference in air humidity, wherein the difference in air humidity is at least partially effected by changes in the environmental conditions due to the change in flying altitude after the aircraft takes off, and wherein the coating is a system in which a decomposition process occurs due to a decrease in air humidity at high altitudes, and which preferably becomes so brittle due to the low humidity in the tropopause that it suffers a loss of adhesion until detachment occurs, and wherein the coating has a casein-based low-filled coating material;
b) exposing the part of the surface to be protected to (i) a temperature change and/or (ii) UV irradiation (iii) and/or addition of a decomposing component and/or (iv) a difference in air humidity, so that the coating together with any contaminants and/or icing thereon detaches.

2. Method according to claim 1, wherein the UV radiation is brought about at least partially by changes in the environmental conditions due to the change in flying altitude after the aircraft takes off.

3. Method according to claim 1 or 2, wherein the temperature change is brought about at least partially by heating the part of the surface to be protected before or after coating.

4. Method according to any one of the preceding claims, wherein the coating is applied by a device that is integral with the aircraft.

5. Method according to any one of the preceding claims, wherein the UV radiation is provided at least partially by an artificial UV light source.

6. Method according to any one of the preceding claims, wherein the coating is applied less than 30 minutes before the aircraft takes off.

7. Aircraft with a coating on a part of its surface, wherein the coating is designed so that it can, within a period of ≤ 3 hours from take-off of the aircraft and in normal flying conditions, reduce the adhesion to the part of the surface to be protected until detachment occurs on the basis of (i) temperature change, wherein the temperature change is at least partially caused by changes in the environmental conditions due to the change in flying altitude after the aircraft takes off, and coating materials of the coating are selected from polyurethane dispersions, acrylate dispersions or polyvinyl acetate dispersions or biological binders, and/or (ii) UV radiation using a polymer containing acid-labile groups in the main chain of the polymer, and photo-acids as initiators as coating materials for the polymer coating and/or (iii) addition of a decomposing component selected from enzyme solutions, wherein biopolymers such as sugars or proteins are used as the binder component of the coating, and/or addition of a decomposing component selected from acids and/or bases, wherein coating materials of the coating are selected from polyesters, and/or (iv) difference in air humidity, wherein the difference in air humidity is at least partially effected by changes in the environmental conditions due to the change in flying altitude after the aircraft takes off, and wherein the coating is a system in which a decomposition process occurs due to a decrease in air humidity at high altitudes, and which preferably becomes so brittle due to the low humidity in the tropopause that it suffers a loss of adhesion until detachment occurs, and wherein the coating has a casein-based low-filled coating material.

8. Aircraft according to claim 7, wherein detachment of the coating is brought about by changes in the environmental conditions due to the change in flying altitude after the aircraft takes off.

9. Aircraft according to claim 7 or 8, comprising a device for applying the coating and/or a device for spraying the coating and/or an artificial UV light source for irradiating the coating.

10. Use of a coating that is designed so that it can, within a period of ≤ 3 hours from take-off of the aircraft and in normal flying conditions, reduce the adhesion to the part of the surface to be protected until detachment occurs on the basis of (i) temperature change, wherein the temperature change is at least partially caused by changes in the environmental conditions due to the change in flying altitude after the aircraft takes off, and coating materials of the coating are selected from polyurethane dispersions, acrylate dispersions or polyvinyl acetate dispersions or biological binders, and/or (ii) UV radiation using a polymer containing acid-labile groups in the main chain of the polymer, and photo-acids as initiators as coating materials for the polymer coating and/or (iii) addition of a decomposing component selected from enzyme solutions, wherein biopolymers such as sugars or proteins are used as the binder component of the coating, and/or addition of a decomposing component selected from acids and/or bases, wherein coating materials of the coating are selected from polyesters, and/or (iv) difference in air humidity, wherein the difference in air humidity is at least partially effected by changes in the environmental conditions due to the change in flying altitude after the aircraft takes off, and wherein the coating is a system in which a decomposition process occurs due to a decrease in air humidity at high altitudes, and which preferably becomes so brittle due to the low humidity in the tropopause that it suffers a loss of adhesion until detachment occurs, and wherein the coating has a casein-based low-filled coating material, for protecting the part of the surface of the aircraft from contamination with insect residues and/or from icing.

11. Use of a coating device for coating a part of the surface of an aircraft to be protected with a coating, which is designed so that it can, within a period of ≤ 3 hours from take-off of the aircraft and in normal flying conditions, reduce the adhesion to the part of the surface to be protected until detachment occurs on the basis of (i) temperature change, wherein the temperature change is at least partially caused by changes in the environmental conditions due to the change in flying altitude after the aircraft takes off, and coating materials of the coating are selected from polyurethane dispersions, acrylate dispersions or polyvinyl acetate dispersions or biological binders, and/or (ii) UV radiation using a polymer containing acid-labile groups in the main chain of the polymer, and photo-acids as initiators as coating materials for the polymer coating and/or (iii) addition of a decomposing component selected from enzyme solutions, wherein biopolymers such as sugars or proteins are used as the binder component of the coating, and/or addition of a decomposing component selected from acids and/or bases, wherein coating materials of the coating are selected from polyesters, and/or (iv) difference in air humidity, wherein the difference in air humidity is at least partially effected by changes in the environmental conditions due to the change in flying altitude after the aircraft takes off, and wherein the coating is a system in which a decomposition process occurs due to a decrease in air humidity at high altitudes, and which preferably becomes so brittle due to the low humidity in the tropopause that it suffers a loss of adhesion until detachment occurs, and wherein the coating has a casein-based low-filled coating material.

## Revendications

1. Procédé de protection d'une partie de la surface d'un avion contre les impuretés dues à des restes d'insectes et/ou contre le givrage, comprenant les étapes suivantes :
a) revêtir la partie de la surface à protéger avec un revêtement qui perd son adhérence sur la partie de la surface à protéger jusqu'au détachement dans un intervalle de ≤ 3 heures à compter du départ de l'avion et dans des conditions de vol normales du fait (i) de la variation de température, dans lequel la variation de température est au moins partiellement induite par les changements de condition atmosphérique du fait de la variation de la hauteur de vol après le départ de l'avion et les matériaux de revêtement du revêtement sont choisis parmi les dispersions de polyuréthane, les dispersions d'acrylate ou les dispersions d'acétate de polyvinyle ou les liants biologiques et/ou (ii) du rayonnement UV en utilisant un polymère qui contient des groupes instables aux acides dans la chaîne principale du polymère et des photoacides en tant qu'initiateurs en tant que matériaux de revêtement pour le revêtement et/ou (iii) de l'ajout d'un élément décomposant qui est choisi parmi les solutions enzymatiques et/ou les acides et/ou les bases et/ou (iv) de la différence d'humidité de l'air, dans lequel la différence d'humidité de l'air est au moins partiellement induite par les changements de condition atmosphérique du fait de la variation de la hauteur de vol après le départ de l'avion, et dans lequel le revêtement est un système dans lequel un processus de décomposition intervient du fait d'une humidité de l'air réduite à des hauteurs élevées et qui devient de préférence si fragile du fait de la faible humidité dans la tropopause qu'il subit une perte d'adhérence allant jusqu'au détachement, et dans lequel le revêtement comprend un matériau de revêtement faiblement chargé à base de caséine ;
b) soumettre la partie de la surface à protéger (i) à la variation de température et/ou (ii) au rayonnement UV (iii) et/ou à l'ajout de l'élément décomposant et/ou (iv) à la différence d'humidité de l'air de sorte que le revêtement se détache avec les impuretés et/ou le givrage éventuellement présents dessus.

2. Procédé selon la revendication 1, dans lequel le rayonnement UV est au moins partiellement induit par les changements de condition atmosphérique du fait de la variation de la hauteur de vol après le départ de l'avion.

3. Procédé selon la revendication 1 ou 2, dans lequel la variation de température est au moins partiellement induite par le chauffage de la partie de la surface à protéger avant ou après le revêtement.

4. Procédé selon l'une des revendications précédentes, dans lequel le revêtement est déposé par un dispositif solidement relié à l'avion.

5. Procédé selon l'une des revendications précédentes, dans lequel le rayonnement UV est au moins partiellement induit par une source de lumière UV artificielle.

6. Procédé selon l'une des revendications précédentes, dans lequel le revêtement est déposé moins de 30 minutes avant le départ de l'avion.

7. Avion possédant un revêtement sur une partie de sa surface, dans lequel le revêtement est conçu de sorte à perdre son adhérence sur la partie de la surface à protéger jusqu'au détachement dans un intervalle de ≤ 3 heures à compter du départ de l'avion et dans des conditions de vol normales du fait (i) de la variation de température, dans lequel la variation de température est au moins partiellement induite par les changements de condition atmosphérique du fait de la variation de la hauteur de vol après le départ de l'avion et les matériaux de revêtement du revêtement sont choisis parmi les dispersions de polyuréthane, les dispersions d'acrylate ou les dispersions d'acétate de polyvinyle ou les liants biologiques et/ou (ii) du rayonnement UV en utilisant un polymère qui contient des groupes instables aux acides dans la chaîne principale du polymère et des photoacides en tant qu'initiateurs en tant que matériaux de revêtement pour le revêtement et/ou (iii) de l'ajout d'un élément décomposant qui est choisi parmi les solutions enzymatiques, dans lequel des biopolymères comme des sucres ou des protéines sont employés en tant que composant du liant du revêtement, et/ou de l'ajout d'un élément décomposant, qui est choisi parmi les acides et/ou les bases, dans lequel les matériaux de revêtement du revêtement sont choisis parmi les polyesters et/ou (iv) de la différence d'humidité de l'air, dans lequel la différence d'humidité de l'air est au moins partiellement induite par les changements de condition atmosphérique du fait de la variation de la hauteur de vol après le départ de l'avion et dans lequel le revêtement est un système dans lequel un processus de décomposition intervient du fait d'une humidité de l'air réduite à des hauteurs élevées et qui devient de préférence si fragile du fait de la faible humidité dans la tropopause qu'il subit une perte d'adhérence allant jusqu'au détachement, et dans lequel le revêtement comprend un matériau de revêtement faiblement chargé à base de caséine.

8. Avion selon la revendication 7, dans lequel le détachement du revêtement peut être induit par les changements de condition atmosphérique du fait de la variation de la hauteur du vol après le départ de l'avion.

9. Avion selon la revendication 7 ou 8, comprenant un dispositif pour le dépôt du revêtement et/ou un dispositif pour la pulvérisation du revêtement et/ou une source de lumière UV artificielle pour l'irradiation du revêtement.

10. Utilisation d'un revêtement, qui est conçu de sorte à perdre son adhérence sur une partie de la surface à protéger de l'avion jusqu'au détachement dans un intervalle de ≤ 3 heures à compter du départ de l'avion et dans des conditions de vol normales du fait (i) de la variation de température, dans lequel la variation de température est au moins partiellement induite par les changements de condition atmosphérique du fait de la variation de la hauteur de vol après le départ de l'avion et les matériaux de revêtement du revêtement sont choisis parmi les dispersions de polyuréthane, les dispersions d'acrylate ou les dispersions d'acétate de polyvinyle ou les liants biologiques et/ou (ii) du rayonnement UV en utilisant un polymère qui contient des groupes instables aux acides dans la chaîne principale du polymère et des photoacides en tant qu'initiateurs en tant que matériaux de revêtement pour le revêtement et/ou (iii) de l'ajout d'un élément décomposant qui est choisi parmi les solutions enzymatiques, dans lequel des biopolymères comme des sucres ou des protéines sont employés en tant que composant du liant du revêtement, et/ou de l'ajout d'un élément décomposant, qui est choisi parmi les acides et/ou les bases, dans lequel les matériaux de revêtement du revêtement sont choisis parmi les polyesters et/ou (iv) de la différence d'humidité de l'air, dans lequel la différence d'humidité de l'air est au moins partiellement induite par les changements de condition atmosphérique du fait de la variation de la hauteur de vol après le départ de l'avion et dans lequel le revêtement est un système dans lequel un processus de décomposition intervient du fait d'une humidité de l'air réduite à des hauteurs élevées et qui devient de préférence si fragile du fait de la faible humidité dans la tropopause qu'il subit une perte d'adhérence allant jusqu'au détachement, et dans lequel le revêtement comprend un matériau de revêtement faiblement chargé à base de caséine, pour la protection de la partie de la surface de l'avion contre les impuretés dues à des restes d'insectes et/ou contre le givrage.

11. Utilisation d'un dispositif de revêtement pour revêtir une partie de la surface à protéger d'un avion avec un revêtement, qui est conçu de sorte à perdre son adhérence sur la partie de la surface à protéger jusqu'au détachement dans un intervalle de ≤ 3 heures à compter du départ de l'avion et dans des conditions de vol normales du fait (i) de la variation de température, dans lequel la variation de température est au moins partiellement induite par les changements de condition atmosphérique du fait de la variation de la hauteur de vol après le départ de l'avion et les matériaux de revêtement du revêtement sont choisis parmi les dispersions de polyuréthane, les dispersions d'acrylate ou les dispersions d'acétate de polyvinyle ou les liants biologiques et/ou (ii) du rayonnement UV en utilisant un polymère qui contient des groupes instables aux acides dans la chaîne principale du polymère et des photoacides en tant qu'initiateurs en tant que matériaux de revêtement pour le revêtement et/ou (iii) de l'ajout d'un élément décomposant qui est choisi parmi les solutions enzymatiques, dans lequel des biopolymères comme des sucres ou des protéines sont employés en tant que composant du liant du revêtement, et/ou de l'ajout d'un élément décomposant, qui est choisi parmi les acides et/ou les bases, dans lequel les matériaux de revêtement du revêtement sont choisis parmi les polyesters et/ou (iv) de la différence d'humidité de l'air, dans lequel la différence d'humidité de l'air est au moins partiellement induite par les changements de condition atmosphérique du fait de la variation de la hauteur de vol après le départ de l'avion et dans lequel le revêtement est un système dans lequel un processus de décomposition intervient du fait d'une humidité de l'air réduite à des hauteurs élevées et qui devient de préférence si fragile du fait de la faible humidité dans la tropopause qu'il subit une perte d'adhérence allant jusqu'au détachement, et dans lequel le revêtement comprend un matériau de revêtement faiblement chargé à base de caséine.
